# EUROPÄISCHE PATENTSCHRIFT

(11) **EP 0 429 807 B1**
(45) Veröffentlichungstag und Bekanntmachung des Hinweises auf die Patenterteilung: **05.01.1994**
(21) Anmeldenummer: 90119333.4
(22) Anmeldetag: 09.10.1990
(51) Int. Cl.: B62K 19/16, B62K 19/28

(54) **Fahrradrahmen**
Bicycle frame
Cadre de vélo

(30) Priorität: 20.11.1989 DE 3938509
(43) Veröffentlichungstag der Anmeldung: 05.06.1991
(73) Patentinhaber: LOOK S.A., 58004 Nevers Cédex (FR)
(72) Erfinder: van Raemdonck, Joris, B-2768 Bazel (BE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 230 839
- FR-A- 2 254 238
- US-A- 4 493 749

## Beschreibung

Die Erfindung betrifft einen Fahrradrahmen gemäß dem Oberbegriff des Patentanspruchs 1.

Ein Fahrradrahmen dieser Art sowie ein Verfahren zu seiner Herstellung ist in dem US-Patent 4 493 749 beschrieben und zeichnet sich durch geringes Gewicht, weitgehende Freiheit in der Formgestaltung und vorteilhafte Fertigungsmöglichkeiten aus.

Aufgabe der vorliegenden Erfindung ist es, einen derartigen Fahrradrahmen, insbesondere hinsichtlich der erzielbaren mechanischen Stabilitäten weiter zu verbessern und die Fertigung unter Beibehaltung aller sonstigen Vorteile zusätzlich zu vereinfachen.

Gelöst wird diese Aufgabe nach der Erfindung im wesentlichen durch die Merkmale des Anspruchs 1.

Von besonderem Vorteil ist dabei die Schaffung eines äußerst stabilen, hohe mechanische Festigkeiten gewährleistenden Verbands zwischen Sitzrohr, unterem Rahmenrohr, Hintergabelrohren und Tretlagergehäuse.

Durch die Ausgestaltung der verwendeten Wickelbandage hinsichtlich der Dimensionierung bzw. Festigkeit der Fäden und die wählbaren Richtungen des Fadenverlaufs lassen sich die über die verschiedenen Rohre und auch über das Tretlager in den Verband eingeleiteten Kräfte optimal aufnehmen und verteilen, so daß in unerwünschter Weise ggf. besonders stark belastete Bereiche vermieden werden können.

Durch Verwendung einer speziellen, in den Wickelverband integrierten Klammerbandage im Gabelungsbereich der Hintergabelrohre kann auf einfache Weise eine besonders hohe Sicherheit gegen Spreizkräfte im Bereich des Durchgangs für das Sitzrohr erzielt werden.

Eine vorteilhafte Verbindung zwischen oberem Rahmenrohr und Sitzrohr wird insbesondere dadurch realisiert, daß das obere Rahmenrohr verlängert ausgeführt, sitzrohrseitig flachgedrückt, um das Sitzrohr geschlungen und mit dem freien Ende zum Rahmenrohr zurückgeführt sowie am Rahmenrohr anliegend mittels einer Wickelbandage fixiert wird, die insbesondere sowohl Sitzrohr und Rahmenrohr umschlingt.
Diese Verbindung von oberem Rahmenrohr und Sitzrohr zeichnet sich durch besondere Festigkeit und Stabilität aus.

In analoger Weise wie die geschilderte Verbindung zwischen oberem Rahmenrohr und Sitzrohr kann auch die Verbindung zwischen dem unteren Ende des Sitzrohres und dem Tretlagergehäuse erfolgen, und diese tretlagerseitige Verbindungstechnik wird vorteilhafterweise kombiniert mit einer Mehrrohr-Ausführung des unteren Rahmenrohres. Dieses untere Rahmenrohr besteht dabei vorzugsweise aus vier mittels einer Wikkelbandage umschlungenen Einzelrohren, die vor dem Sitzrohr derart paarweise gabelförmig auseinandergeführt sind, daß ein Rohrpaar unterhalb und ein Rohrpaar oberhalb des Tretlagergehäuses verläuft und aneinandergrenzende Einzelrohre zusammen mit jeweils einer Wickelbandage die jeweiligen Hintergabelrohre bilden.
Durch diese Ausgestaltung wird eine überraschend hohe mechanische Festigkeit erzielt, da sich in Verbindung mit der den gesamten Bereich des Tretlagergehäuses umschlingenden Wickelbandage optimale Krafteinleitungen in den Wickelverband und außerdem hohe Festigkeiten der in diesen Wickelverband eintretenden Rohre ergeben.

Weitere vorteilhafte Ausgestaltungen und Merkmale sind insbesondere in den Unteransprüchen angegeben.

Die Erfindung wird nachfolgend unter Bezugnahme auf die Zeichnung näher erläutert; in der Zeichnung zeigt:
- Figur 1: eine schematische Darstellung zur Erläuterung des Grundaufbaus des Fahrradrahmens nach der Erfindung,
- Figur 2: eine vergrößerte Darstellung des Tretlagerbereichs des Fahrradrahmens nach Figur 1 in Seitenansicht,
- Figur 3: eine schematische Darstellung des Tretlagerbereichs nach Figur 2 in einer Draufsicht,
- Figur 4: eine schematische Darstellung zur Erläuterung der Verbindung von Sitzrohr und oberem Rahmenrohr,
- Figur 5: eine schematische Darstellung einer bevorzugten Verbindung von Sitzrohr und Tretlagergehäuse,
- Figur 6: eine schematische Darstellung einer Ausführungsvariante einer Verbindung zwischen tretlagerseitigem Wickelverband und Sitzrohr, und
- Figur 7: eine schematische Darstellung einer bevorzugten Ausgestaltung der Rahmenrohre und der Verbindung dieser Rahmenrohre mit dem Tretlagergehäuse.

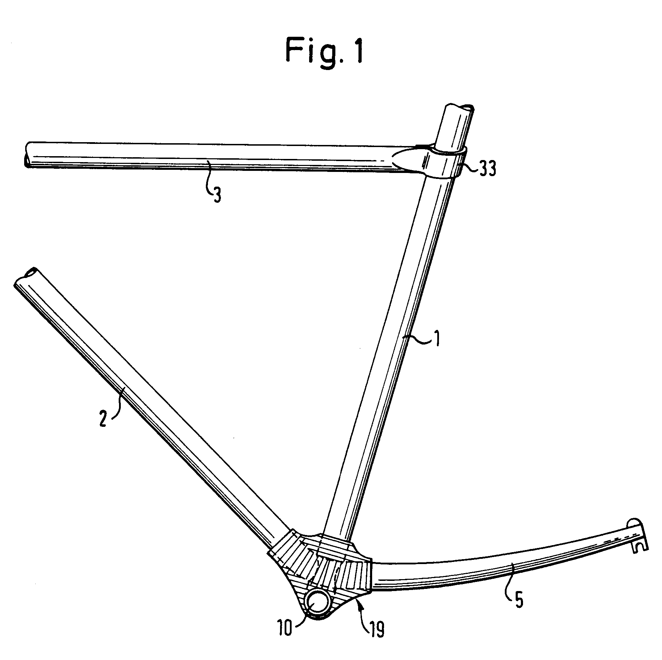

Die in Figur 1 gezeigte Teildarstellung eines Fahrradrahmens umfaßt ein Sitzrohr 1, ein unteres Rahmenrohr 2, ein oberes Rahmenrohr 3 sowie Hintergabelrohre 5 und ein insbesondere metallisch ausgebildetes Tretlagergehäuse 10.

Die Verbindung zwischen dem oberen Rahmenrohr 3 und dem unteren Rahmenrohr 2 und deren Verbindung mit einem Lenkkopfrohr ist in Figur 1 nicht gezeigt, entspricht aber vorzugsweise der im Zusammenhang mit der europäischen Patentanmeldung 89 109 392.4 erläuterten Ausgestaltung.

Sämtliche Rohre bestehen wiederum in der in der erwähnten europäischen Patentanmeldung beschriebenen Weise aus einem Compositmaterial in Form eines faser- und/oder gewebeverstärkten Kunststoffmaterials, insbesondere unter Verwendung von Carbonfasern, wobei die Formgebung und Aushärtung dieser Rohre sowie der zugehörigen Verbindungs- bzw. Wickelbandagen unter Anwendung von Druck und Temperatur in einer Form erfolgt.

Oberes Rahmenrohr 3 und Sitzrohr 1 sind über eine im einzelnen noch erläuterte Schlingenbandage 33 miteinander verbunden.

Das untere Rahmenrohr 2 besteht aus zwei Einzelrohren, die sich im Tretlagerbereich gabeln und dann die Hintergabelrohre 5 bilden.

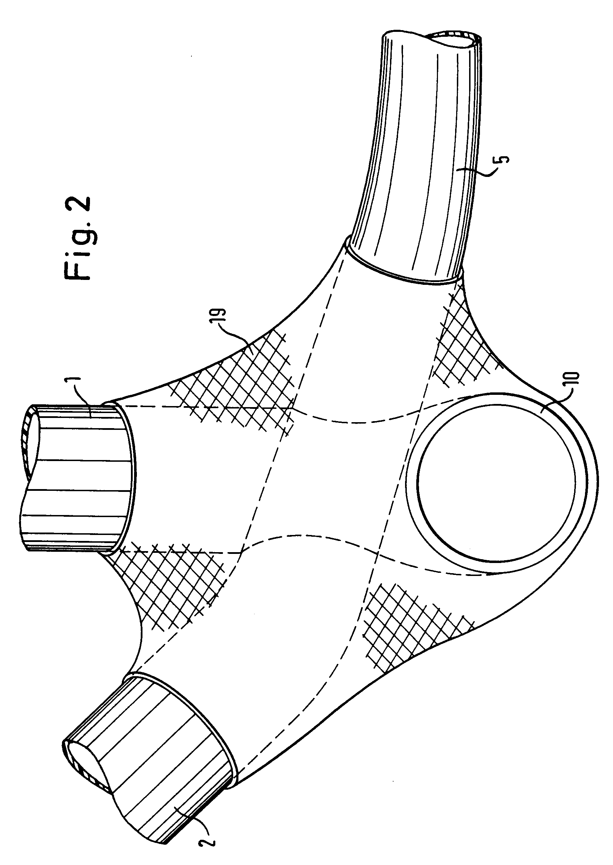

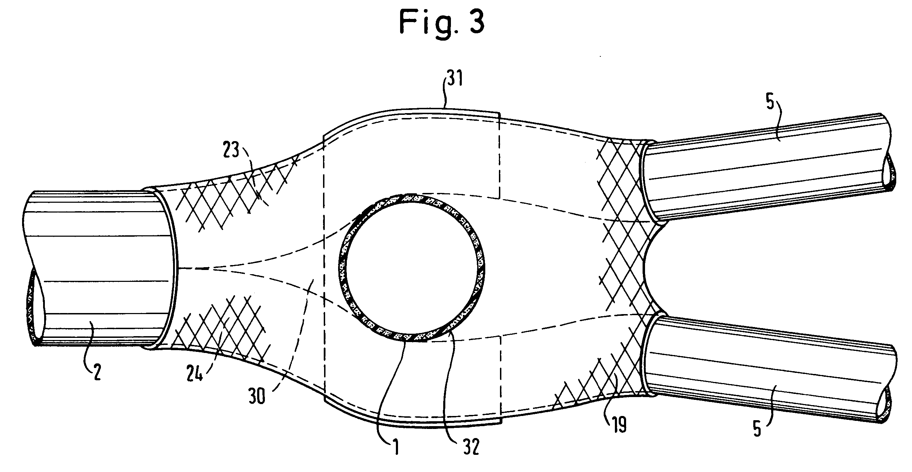

Im Bereich des Tretlagergehäuses 10 wird mittels einer Wickelbandage 19 ein Wickelverband geschaffen, der im einzelnen in den Figuren 2 und 3 gezeigt ist.

Die Seitenansicht gemäß Figur 2 läßt die Relativlage von Sitzrohr 1, unterem Rahmenrohr 2 mit sich anschließenden Hintergabelrohren 5 und Tretlagergehäuse 10 erkennen.
Das Tretlagergehäuse 10 ist über eine sitzrohrseitig hülsenartig ausgebildete Wickelbandage mit dem Sitzrohr 1 verbunden und unmittelbar unterhalb und angrenzend an die gegabelten Einzelrohre 23, 24 angeordnet, wie dies in Figur 3 zu sehen ist.

Die Einzelrohre 23, 24 können mittels einer speziellen Klammerbandage 31 gegen Spreizung gesichert werden, und dabei wird Vorsorge getroffen, daß in dem in Figur 3 gezeigten Gabelungsbereich 30 ein Durchgang 32 für das Sitzrohr 1 geschaffen wird, der ein problemloses Zusammenfügen dieser Bestandteile ermöglicht, die anschließend über die Wickelbandage 19 zu einem stabilen Verband zusammengefaßt werden, in den auch das Tretlagergehäuse 10 integriert ist.

Durch diesen Wickelverband wird ein äußerst kompakter und mechanisch stabiler Verbindungsbereich geschaffen, der es ermöglicht, alle in der Praxis auftretenden Kräfte günstig in diesen Verband einzuleiten und aufzunehmen.

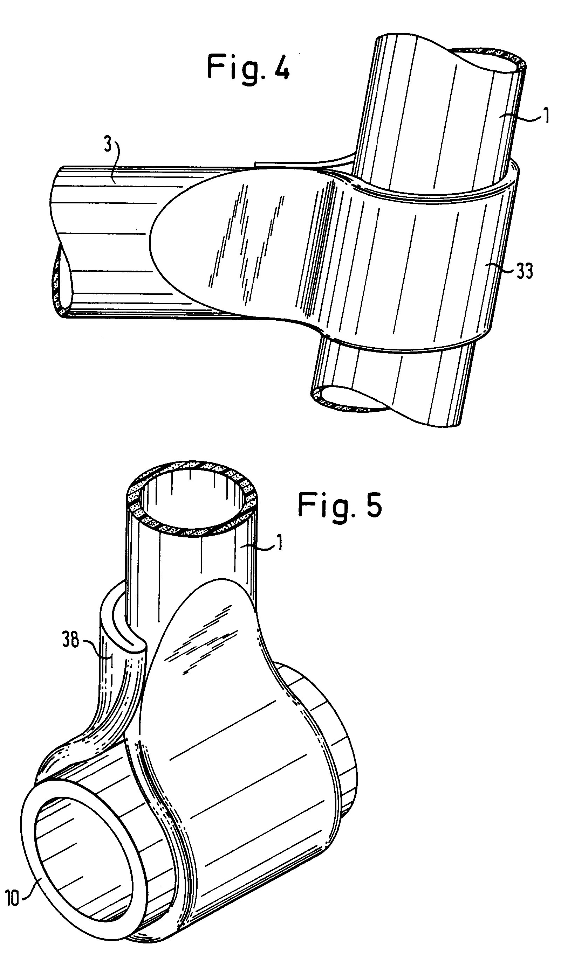

Figur 4 zeigt die Verbindung zwischen oberem Rahmenrohr 3 und Sitzrohr 1 mittels einer Schlingenbandage 33. Diese Schlingenbandage 33 ermöglicht es, das obere Rahmenrohr 3 und das Sitzrohr 1 stoßend miteinander zu verbinden und somit eine zu einem erhöhten Fertigungsaufwand führende Durchdringungsbohrung zu vermeiden. Die freien Enden der Schlingenbandage 33 können am oberen Rahmenrohr 3 mittels einer nicht dargestellten Wickelbandage fixiert werden, die ggf. auch noch um das Sitzrohr 1 geführt wird und in gleicher Weise wie die übrigen Wickelbandagen ausgebildet sein kann und in einer Form unter Druck- und Wärmeeinwirkung ausgehärtet wird.

Figur 5 zeigt eine vorteilhafte Verbindungstechnik zwischen Sitzrohr 1 und Tretlagergehäuse 10. Dabei wird das Sitzrohr 1 länger als eigentlich erforderlich ausgeführt, und der dieser Überlänge entsprechende Endabschnitt des Sitzrohres wird in flachgedrücktem Zustand um das Tretlagergehäuse 10 geschlungen und auf das Sitzrohr 1 zurückgeführt. Dabei schmiegt sich dieser flachgedrückte Endabschnitt 38 sowohl dem Tretlagergehäuse 10 als auch dem Sitzrohr 1 formschlüssig an. Durch eine Wickelbandage erfolgt dann die endgültige Fixierung, wobei die gegenseitige Verbindung der einzelnen Bestandteile in der bereits erläuterten Weise in einer Form unter Einwirkung von Druck und Temperatur durchgeführt wird.

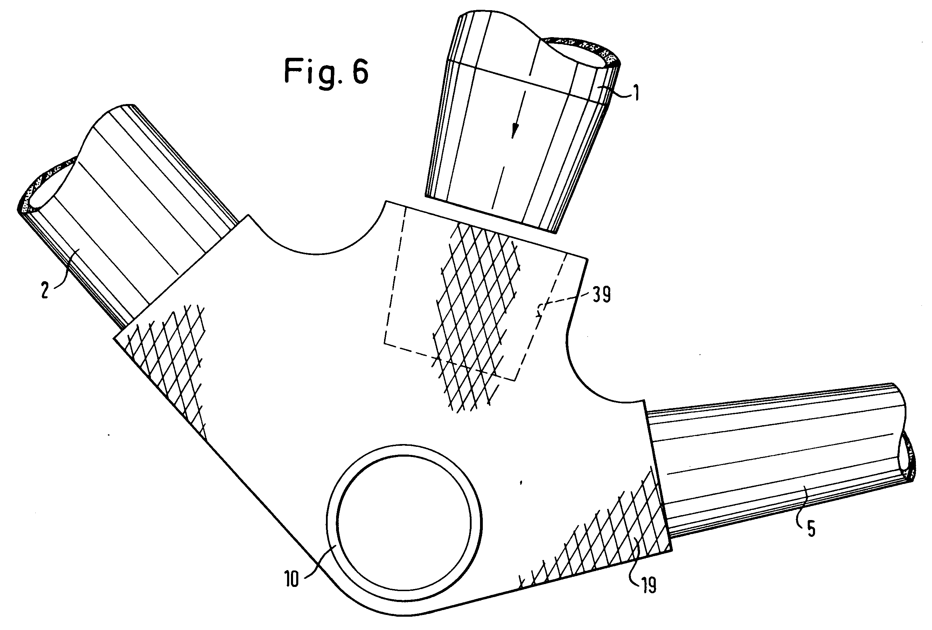

Figur 6 zeigt eine Ausführungsvariante der Erfindung, bei der unteres Rahmenrohr 2, Tretlagergehäuse 10 und Hintergabelrohre durch eine Wickelbandage zu einem Wickelverband zusammengefaßt sind. Dabei ist in diesen Wickelverband das Sitzrohr 1 noch nicht integriert, sondern es ist in diesem Wickelverband eine Vertiefung 39 in leicht konischer Ausgestaltung vorgesehen, die zur formschlüssigen Aufnahme des nachträglich einsetzbaren Endes des Sitzrohres 1 dient. Das Sitzrohr 1 kann in dieser Vertiefung 39 verklebt werden, aber vorzugsweise erfolgt die Verbindung durch Verschmelzen in einer geheizten Form, wobei sich bis in das Ende des Sitzrohres 1 ein Druckschlauch erstreckt, der sicherstellt, daß die Wandung des Sitzrohres fest gegen die Wandung der Vertiefung 39 gedrückt und damit ein einwandfreier Verbund hergestellt wird.
Diese Ausführungsvariante kann in Abhängigkeit von den jeweiligen Fertigungsmöglichkeiten in fertigungstechnischer Hinsicht Vorteile erbringen.

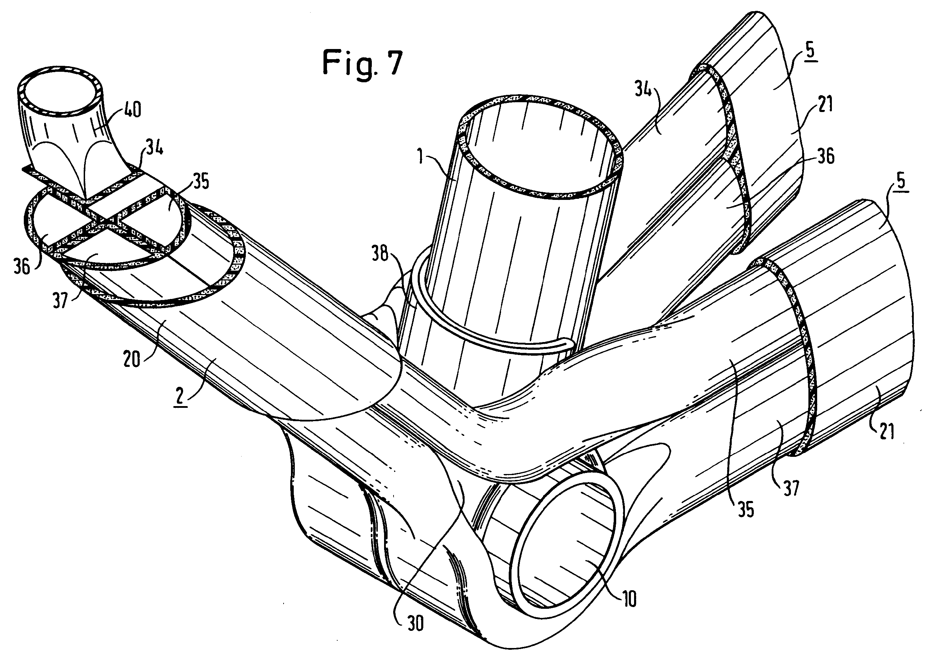

Eine besonders vorteilhafte Ausgestaltung der Erfindung ist in Figur 7 gezeigt.
Dabei ist das Sitzrohr 1 mit dem Tretlagergehäuse in der bereits anhand der Figur 5 erläuterten Weise verbunden und diese Verbindungsart ist kombiniert mit einer Vierrohr-Ausführung des unteren Rahmenrohres 2. Zu bemerken ist allerdings, daß die durch die Vierrohr-Ausführung des unteren Rahmenrohres 2 ermöglichte Technik der Verbindung mit dem Tretlagergehäuse auch unabhängig von der speziellen Verbindung zwischen Sitzrohr 1 und Tretlagergehäuse von Vorteil ist.

Das untere Rahmenrohr 2 besteht aus Einzelrohren 34, 35, 36, 37, die von einer Wickelbandage 20 umgeben sind. Anstelle einer Wickelbandage kann jedoch auch ein Rohr verwendet werden, das dieses Einzelrohre 34, 35, 36, 37 umschließt bzw. diesen Rohren als Aufnahme dient. Bis zur endgültigen Fertigstellung ist bevorzugt in jedem der Rohre ein Druckschlauch 40 angeordnet, der während des Aushärtevorgangs in einer Form unter Druck gesetzt ist.

Vor dem Sitzrohr 1 sind diese Einzelrohre 34, 35, 36, 37 derart paarweise gabelförmig auseinandergeführt, daß ein erstes Rohrpaar 36, 37 unterhalb und ein zweites Rohrpaar 34, 35 oberhalb des Tretlagergehäuses 10 verläuft und dieses Tretlagergehäuse 10 somit zwischen sich einschließt. Anschließend an das Tretlagergehäuse 10 bilden jeweils aneinandergrenzende Einzelrohre 34, 36 bzw. 35, 37 des oberen bzw. unteren Gabelelements die jeweiligen Hintergabelrohre 5, die von einem Außenrohr oder einer Wickelbandage umschlossen sind.

Da die Einzelrohre 34, 36 bzw. 35, 37 im Hintergabelbereich übereinander angeordnet sind, ergibt sich eine hinsichtlich der aufzunehmenden Kräfte besonders günstige Ausgestaltung.

Im Gabelungsbereich 30 können die Einzelrohre flachgedrückt bzw. so verformt werden, daß sich eine sowohl räumlich als auch hinsichtlich der Aufnahme der auftretenden Kräfte optimale Struktur ergibt, die dann in der bereits erläuterten Weise umwickelt und in einer Form unter Einwirkung von Druck

## Patentansprüche

1. Fahrradrahmen, bestehend aus einem Sitzrohr (1), einem oberen Rahmenrohr (3) und einem unteren Rahmenrohr (2), einem mit diesen Rahmenrohren (1, 2) verbundenen Lenkkopfrohr sowie vom Verbindungsbereich zwischen Sitzrohr und unterem Rahmenrohr (2) ausgehenden Hintergabelrohren (5) und einem in diesem Verbindungsbereich angeordneten Tretlagergehäuse (10), wobei das untere Rahmenrohr von zumindet zwei ummantelten Einzelrohren (23, 24; 34, 35, 36, 37) gebildet ist, und die Verbindungen zwischen den Rohren (1, 2, 3, 5, 23, 24; 34, 35, 36, 37) mittels Wickelbandagen (19, 20, 21) aus faser- und/oder gewebeverstärktem Kunststoffmaterial realisiert sind, die unter Einwirkung von Wärme und Druck zusammen mit den Rohren in einer Form aushärtbar sind,
dadurch **gekennzeichnet**,
daß zumindest das Sitzrohr (1), die unteren und oberen Rahmenrohre (2, 3) und die Hintergabelrohre (5) aus faser- und/oder gewebeverstärktem Kunststoffmaterial, insbesondere unter Verwendung von Carbonfasermaterial bestehen, wobei die Einzelrohre (23, 24; 34, 35, 36, 37) des unteren Rahmenrohres vor dem Sitzrohr (1) gabelförmig auseinandergeführt sind
und anschließend an den Verbindungsbereich zwischen Sitzrohr (1) und unterem Rahmenrohr (2) die Hintergabelrohre (5) bilden, und
daß das über eine Wickelbandagenanordnung mit dem Sitzrohr (1) verbundene Tretlagergehäuse (10) unmittelbar angrenzend oder im Gabelungsbereich (30) der Hintergabelrohre (5) angeordnet und von der Sitzrohr (1), unteres Rahmenrohr (2) und Hintergabelrohre (5) miteinander verbindenden Wickelbandage (19) umschlungen und in den gebildeten Wickelverband integriert ist.

2. Fahrradrahmen nach Anspruch 1,
dadurch **gekennzeichnet,**
daß im Gabelungsbereich (30) der Hintergabelrohre (5) ein mittels einer Klammerbandage (31) gegen Spreizung gesicherter Durchgang (32) für das Sitzrohr (1) ausgebildet ist.

3. Fahrradrahmen nach Anspruch 1,
dadurch **gekennzeichnet,**
daß das obere Rahmenrohr (3) und das Sitzrohr (1) stoßend zusammengeführt und durch eine das Sitzrohr (1) umgreifende und mit ihren freien Enden am oberen Rahmenrohr (3) insbesondere durch eine Wickelbandage fixierte Schlingenbandage (33) miteinander verbunden sind.

4. Fahrradrahmen nach Anspruch 3,
dadurch **gekennzeichnet,**
daß das obere Rahmenrohr (3) verlängert ausgeführt, sitzrohrseitig flachgedrückt, um das Sitzrohr (1) geschlungen und mit dem freien Ende zum oberen Rahmenrohr (3) zurückgeführt sowie an diesem Rahmenrohr (3) anliegend mittels einer Wikkelbandage fixiert ist.

5. Fahrradrahmen nach einem der vorhergehenden Ansprüche,
dadurch **gekennzeichnet,**
daß das untere Ende des Sitzrohres (1) verlängert ausgebildet, tretlagerseitig flachgedrückt, um das Tretlagergehäuse (10) geschlungen, mit dem freien Ende (38) zum Sitzrohr (1) zurückgeführt und am Sitzrohr (1) anliegend über eine Wickelbandage fixiert ist.

6. Fahrradrahmen nach einem der vorhergehenden Ansprüche,
dadurch **gekennzeichnet,**
daß in dem tretlagerseitigen Wickelverband eine insbesondere konisch ausgebildete Vertiefung (39) zur formschlüssigen Aufnahme des Endes des Sitzrohres (1) ausgebildet ist, und daß das Sitzrohr (1) in dieser Vertiefung (39) durch Verschmelzen, Verkleben und dergleichen befestigt ist.

7. Fahrradrahmen nach einem der vorhergehenden Ansprüche,
dadurch **gekennzeichnet,**
daß das untere Rahmenrohr (2) aus vier von einer Wickelbandage (20) umschlungenen Einzelrohren (34, 35, 36, 37) besteht, die vor dem Sitzrohr (1) derart paarweise gabelförmig auseinandergeführt sind, daß ein Rohrpaar (36, 37) unterhalb und ein Rohrpaar (34, 35) oberhalb des Tretlagergehäuses (10) verläuft und aneinandergrenzende Einzelrohre (34, 36; 35, 37) zusammen mit jeweils einer Wickelbandage (21) die jeweiligen Hintergabelrohre (5) bilden.

8. Fahrradrahmen nach Anspruch 7,
dadurch **gekennzeichnet,**
daß zumindest die unterhalb des Tretlagergehäuses (10) verlaufenden Bereiche der Einzelrohre (36, 37) flachgedrückt und der Kontur des Tretlagergehäuses (10) folgend angeordnet sind.

9. Fahrradrahmen nach einem der vorhergehenden Ansprüche,
dadurch gekennzeichnet, daß
die Einzelrohre (34, 35, 36, 37) sowohl im Bereich des unteren Einzelrohres (2) als auch im Bereich jeder Hintergabelrohre (5) in entsprechenden Ummantelungsrohren angeordnet sind.

## Claims

1. Bicycle frame comprising a saddle tube (1), an upper frame tube (3) and a lower frame tube (2), a steering head tube connected to these frame tubes (1, 2) as well as rear fork tubes (5) going out from the connection region between saddle tube (1) and lower frame tube (2) and a pedal crank bracket (10) arranged in this connection region, with the lower frame tube (2) being formed from at least two enjacketed individual tubes (23, 24; 34, 35, 36, 37), and with the connections between the tubes (1, 2, 3, 5, 23, 24; 34, 35, 36, 37) being realised by means of coiled bands (19, 20, 21) made out of fibre-reinforced and/or fabric-reinforced plastic material which, together with the tubes, can be cured in a form under the action of heat and pressure, **characterised in that** at least the saddle tube (1), the lower and upper frame tubes (2, 3) and the rear fork tubes (5) are made out of fibre-reinforced and/or fabric-reinforced plastic material, in particular with the use of carbon-fibre material, wherein the individual tubes (23, 24; 34, 35, 36, 37) of the lower frame tube are guided apart in a forked shape before the saddle tube (1) and subsequently form the rear fork tubes (5) at the connection region between saddle tube (1) and lower frame tube (2), and in that the pedal crank (10) which is connected to the saddle tube (1) via a coiled band arrangement is arranged directly bordering on or in the forking region (30) of the rear fork tubes (5) and is enwrapped by the coiled band (19) which connects the saddle tube (1), the lower frame tube (2) and the rear fork tubes (5) with one another and is integrated into the coiled bandage formed thereby.

2. Bicycle frame in accordance with claim 1, characterised in that a passage (32) for the saddle tube (1) is formed in the forking region (30) of the rear fork tubes (5) and is protected against widening by means of a bracing band (31).

3. Bicycle frame in accordance with claim 1, characterised in that the upper frame tube (3) and the saddle tube are butted together and are connected to one another by a loop band (33) which grips around the saddle tube (1) and which is fixed with its free ends to the upper frame tube (3), in particular by a coiled band.

4. Bicycle frame in accordance with claim 3, characterised in that the upper frame tube (3) is formed extended, is pressed flat at its saddle tube end, is wrapped around the saddle tube (1), and is guided back at its free end to the upper frame tube (3), as well as being fixed to and in contact with this upper frame tube (3) by means of a coiled band.

5. Bicycle frame in accordance with one of the preceding claims, characterised in that the lower end of the saddle tube (1) is formed extended, is pressed flat at its pedal crank end, is wrapped around the pedal crank bracket (10), is guided back at is free end to the saddle tube (1) and is fixed to and in contact with the saddle tube (1) via a coiled band.

6. Bicycle frame in accordance with one of the preceding claims, characterised in that a recess (39) which is in particular conical is formed in the coiled band at the pedal crank end for the form-matched receipt of the end of the saddle tube (1), and in that the saddle tube (1) is secured in this recess (39) by melting, adhesive bonding or the like.

7. Bicycle frame in accordance with one of the preceding claims, characterised in that the lower frame tube (2) comprises four individual tubes (34, 35, 36, 37) which are enwrapped by a coiled band (20) and guided apart prior to the saddle tube (1) in fork pairs in such a manner that one tube pair (36, 37) extends below and one tube pair (34, 35) above the pedal crank bracket (10) and individual mutually bordering tubes (34, 36; 35, 37) form, together with in each case one coiled band (21), the respective rear fork tubes (5).

8. Bicycle frame in accordance with claim 7, characterised in that at least the regions of the individual tubes (36, 37) extending below the pedal crank bracket (10) are pressed flat and are arranged to follow the contour of the pedal crank bracket (10).

9. Bicycle frame in accordance with one of the preceding claims, characterised in that the individual tubes (34, 35, 36, 37) are arranged in corresponding enjacketing tubes both in the region of the lower individual tube (2) and also in the region of each of the rear fork tubes (5).

## Revendications

1. Cadre de vélo composé d'un tube pour selle (1), d'un tube supérieur de cadre (3) et d'un tube inférieur de cadre (2), d'un tube de tête de direction relié à ces tubes (3,2) de cadre, ainsi que de tubes de fourche arrière (5) partant de la zone de liaison entre le tube pour la selle (1) et le tube inférieur de cadre (2) et d'un boîtier de palier de pédalier (10) placé dans cette zone de liaison, le tube inférieur de cadre (2) étant constitué d'au moins deux tubes individuels gainés (23,24,34,35,36,37) et les liaisons entre les tubes (1,2,3,5,23,24,34,35,36,37) étant réalisées au moyen de bandages d'enroulement (19,20,21) en matériau synthétique renforcé par des fibres et/ou par un tissu lesquels bandages sont durcissables dans un moule conjointement avec les tubes, sous influence de température et de pression,
**caractérisé**
en ce que, au moins, le tube pour selle (1), les tubes inférieur et supérieur de cadre (2,3) et les tubes de fourche arrière (5) sont en matériau synthétique renforcé par des fibres et/ou par un tissu, avec utilisation de matériaux en fibre de carbone notamment, les tubes (23,24,34,35,36,37) du tube inférieur de cadre étant séparés les uns des autres en forme de fourche en arrivant devant le tube pour selle (1) pour constituer , contigu à, la zone de liaison entre le tube pour selle (1) et le tube inférieur de cadre (2), les tubes de fourche arrière (5) et
en ce que le boîtier de palier de pédalier (10) relié au tube pour selle (1) par l'intermédiaire d'un agencement de bandage d'enroulement est placé à proximité immédiate ou dans le secteur fourchu (30) des tubes de fourche arrière (5), est enserré par le bandage d'enroulement (19) reliant entre eux le tube pour selle (1), le tube inférieur de cadre (2) et les tubes de fourche arrière (5) et est intégré dans l'assemblage d'enroulement formé .

2. Cadre de vélo selon la revendication 1,
**caractérisé**
en ce que, dans le secteur fourchu (30) des tubes de fourche arrière (5), un passage (32), garanti contre l'écartement au moyen d'un bandage crampon (31), est constitué pour le tube pour selle (1).

3. Cadre de vélo selon la revendication 1,
**caractérisé**
en ce que le tube supérieur de cadre (3) et le tube pour selle (1) se rencontrent et sont reliés entre eux par un bandage à boucle (33) entourant le tube pour selle (1) et fixé par ses extrémités libres au tube supérieur du cadre (3) par un bandage d'enroulement notamment.

4. Cadre de vélo selon la revendication 3,
**caractérisé**
en ce que le tube supérieur de cadre (3) est réalisé avec prolongement, aplati du côté du tube pour selle (1), enroulé autour de ce dernier, ramené par son extrémité libre vers le tube supérieur de cadre (3) et fixé contre ce dernier, ajusté au moyen d'un bandage d'enroulement.

5. Cadre de vélo selon l'une des revendications précédentes,
**caractérisé**
en ce que l'extrémité inférieure du tube pour selle (1) est réalisé avec prolongement aplati du côté du palier de pédalier, enroulé autour du boîtier (10) de ce dernier, ramené par son extrémité libre (38) sur le tube pour selle (1), contre lequel il est fixé, ajusté par l'intermédiaire d'un bandage d'enroulement.

6. Cadre de vélo selon l'une des revendications précédentes,
**caractérisé**
en ce que, dans l'assemblage d'enroulement côté palier du pédalier, un évidement (39), en particulier conique, est configuré pour y loger, bloquée, l'extrémité du tube pour selle (1) et en ce que le tube pour selle (1) est fixé dans cet évidement (39) par fusion mutuelle, collage et analogue.

7. Cadre de vélo selon l'une des revendications précédentes,
**caractérisé**
en ce que le tube inférieur du cadre (2) se compose de quatre tubes individuels (34,35,36,37) enserrés par un bandage d'enroulement (20), lesquels en arrivant devant le tube pour selle (1) se séparent par paires en forme de fourche, de manière qu'une paire de tubes (36,37) passe en dessous et les deux autres au dessus (34,35) du boîtier de palier de pédalier (10) et que les tubes individuels contigüs (34,36,35,37) constituent respectivement ensemble, au moyen d'un bandage d'enroulement respectif (21), les tubes de fourche arrière (5).

8. Cadre de vélo selon la renvendication 7,
**caractérisé**
en ce qu'au moins les secteurs passant au dessous du boîtier de palier de pédalier (10) des tubes individuels (36,37) sont aplatis et disposés suivant le contour du boîtier de palier de pédalier (10).

9. Cadre de vélo selon l'une des renvendications précédentes,
**caractérisé**
en ce que les tubes individuels (34,35,36,37) sont, tant dans le secteur du tube inférieur unique (2), que dans le secteur de chacun des tubes de fourche arrière (5), placés dans des tubes correspondants de gainage.
